# EUROPEAN PATENT SPECIFICATION

(11) **EP 2 395 262 B1**
(45) Date of publication and mention of the grant of the patent: **03.04.2013**
(21) Application number: 10165757.5
(22) Date of filing: 11.06.2010
(51) Int. Cl.: F16H 57/028

(54) **Epicyclic gearbox for tubular motors**
Planetengetriebe für rohrförmige Motoren
Transmission planétaire pour moteurs tubulaires

(43) Date of publication of application: 14.12.2011
(73) Proprietor: NICE S.P.A., 31046 Oderzo (Treviso) (IT)
(72) Inventor: La Fortezza, Francesco, 31046, Oderzo (Treviso) (IT); Perisan, Stefano, 31046, Oderzo (Treviso) (IT)
(74) Representative: Citron, Massimiliano

(56) References cited:
- EP-A1- 0 588 769
- EP-A1- 2 189 684
- DE-C1- 19 711 423
- JP-A- 8 166 050
- US-A- 5 564 995

## Description

### TECHNICAL FIELD OF THE INVENTION

The invention refers to a mechanical reduction gear inside an electric gear motor used to actuate and automate movable barriers or closing systems in general such as gates, doors, garage doors or for moving rolling shutters in general such as curtains, rolling gates, blinds or similar elements.

The described solution refers in particular to a gear motor of the type used in moving rolling shutters in general, but the same concepts can be used in any other mechanical reduction gear.

### STATE OF THE ART

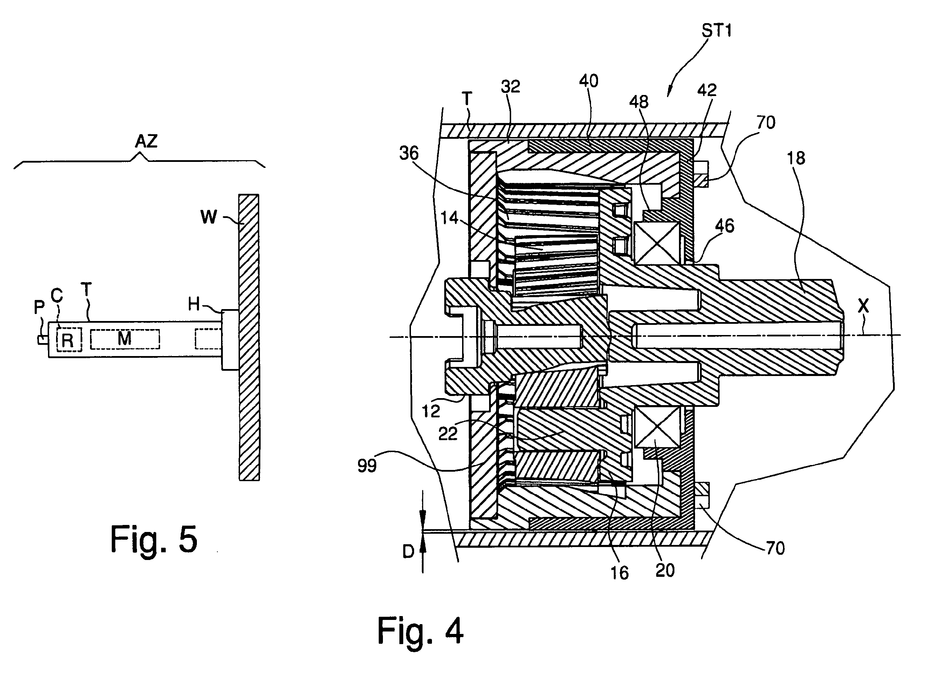

An actuation system AZ of this type (see fig. 5) in general is made up of a tube T that contains: an electric motor M, a mechanical reduction gear R contained in a casing or crown C, and part of a head H in which control circuits and mechanical and/or electronic end-stop devices are housed. The head H can be partially slotted inside the end of the tube T and with it fixed to a wall or box W, with or without the help of the relative support. Projecting at the other end of the tube T there is an output shaft or pinion P directly connected inside the reduction gear R.

The reduction gear R is designed to make large reduction ratios. Usually, it receives an angular velocity of about 3000 revs/min from the electric motor M whereas it supplies the shaft P with a variable velocity, according to the type of use, of 12-25 revs per minute.

The substantial reduction of revs and the small size of the actuation system have led to the use of reduction gears R of the epicyclical type, made up of many stages (generally 3) in cascade. Each stage is subjected to forces of different intensity. The first stage bears a high number of revs, high wear and limited torque whereas the third stage bears high torque, limited wear and a low number of revs. The second stage has intermediate behaviour.

Company cost-reduction policies tend to get rid of expensive high-precision processes and careful but slow assembly procedures for the workers. To make gears, pins and transmission shafts in general, plastic materials and moulding techniques are used, and the coupling tolerances are not very precise.

The small imprecisions, high rotation speed of the motor, and at least the components of the first stage of the reduction gear R, are the main cause for noisiness of the actuation system, which is very unwelcome particularly in indoor applications.

EP 0 588 769 A describes a mechanical reduction gear, contained inside a tube, made up of three epicyclic stages in cascade, contained within a toothed sleeve in which the planets of the three stages engage and interact. Even if provisions are proposed on the geometry of the gears (for example varying the shape or profile of the tooth), the mechanical members still transmit vibrations and noise directly to the outer tube, which from here propagate towards the surrounding area. It would be advantageous for a reduction gear of this type to have better noise characteristics, in particular in indoor applications.

### OBJECTS OF THE INVENTION

The main object of the invention is to improve the state of the art, with a less noisy reduction gear.

Another object of the invention is to make a reduction gear of the aforementioned type that transmits less vibrations to the application on which it is installed and to the surrounding area.

Another object of the invention is to make a reduction gear of the aforementioned type that is modular.

Such objects are obtained by a reduction gear according to claim 1.

According to the invention, the reduction gear comprises a support element, made from cushioning and/or damping and/or elastic material, which extends inside a toothed crown that makes up the epicyclic stage, to rotatably support the output pinion. In this way, not only is the pinion kept coaxial, avoiding it generating noise by becoming misaligned, but the vibrations transmitted to the toothed crown, and from here to the outer tube, are also damped.

As a preferred coupling solution, the support element forms an opening in which the output pinion is inserted. As well as the simplicity of construction, it has been found that there is an advantageous damping of the vibrations of the pinion and a stable coaxial positioning.

A preferred form for the support element envisages that it extends inside the toothed crown transversally to said central axis and forms said opening at the centre of the toothed crown. This ensures excellent centring and negligible bulk in the axial direction in the reduction gear, so that the miniaturisation of the reduction gear is not compromised.

In order to improve efficiency and reduce the friction that could misalign the pinion, anti-friction means can be mounted between said opening and the pinion. In particular, such anti-friction means can comprise a bearing, rolling (for example ball or roller bearings) or sliding (for example bearing brasses), arranged in a suitable bearing seat obtained in the support element. The bearing is mounted to keep the output pinion coaxial to the toothed crown.

In order to further damp the vibrations towards the outside, and to decrease the noise produced, the support element can comprise a portion that overlaps at least part of the outer surface of the toothed crown, so that the support element has a maximum outer diameter that is greater than the maximum outer diameter of the toothed crown. Said portion wraps around all or part of the outer surface of the toothed crown, so as to insulate it from - and to act as a cushion with respect to - the containment tube T (see fig. 4 and 5).

An advantageous embodiment due to its construction simplicity and its damping and insulating efficiency is obtained by designing the support element in the form of a cup with a cavity in which the toothed crown is inserted. The total or partial enveloping and/or surrounding of the outer surface of the toothed crown by the support element has the effect of further damping vibrations towards the outside, and reduces the noise generated inside the tube T.

The support element may be a component forming part of just one epicyclic stage, or else it may have a larger structure and cover many stages. In the former case it is possible to make a reduction module made up of a toothed crown, a planet gear carrier disc with relative satellite gears and output pinion, and a support element for the aforementioned disc. In order to put together the various modules in cascade, in which the output pinion of one becomes the member that inputs rotary motion to be reduced in the subsequent one, it is advantageous for there to be sections or arcs of toothing facing radially outwards on the surface of the support element facing the outside of the toothed crown. These sections or arcs of toothing can engage in the toothed crown of the stage downstream, firmly locking the stages together.

### BRIEF DESCRIPTION OF THE DRAWINGS

Further characteristics and advantages of the invention will become clearer from the example description of a reduction gear, together with the attached drawing, in which:

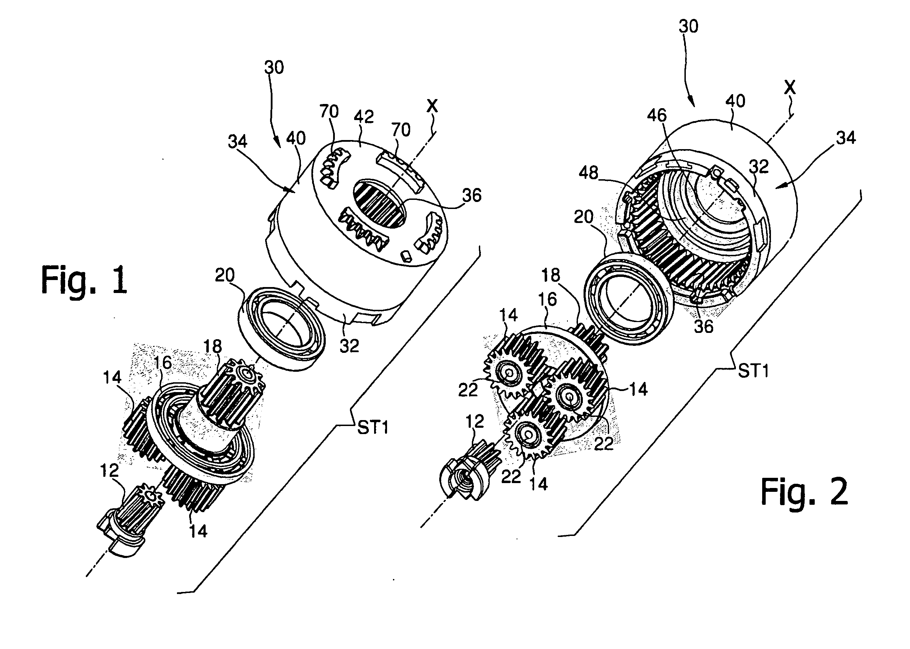

figure 1 shows an exploded view of a stage of the reduction gear;
figure 2 shows an exploded view from another angle of the stage of fig. 1;
figure 3 shows a vertical section view of the reduction gear;
figure 4 shows a vertical section view of the stage of fig. 1;
figure 5 shows a schematic side view of an actuation system.

### EMBODIMENTS OF THE INVENTION

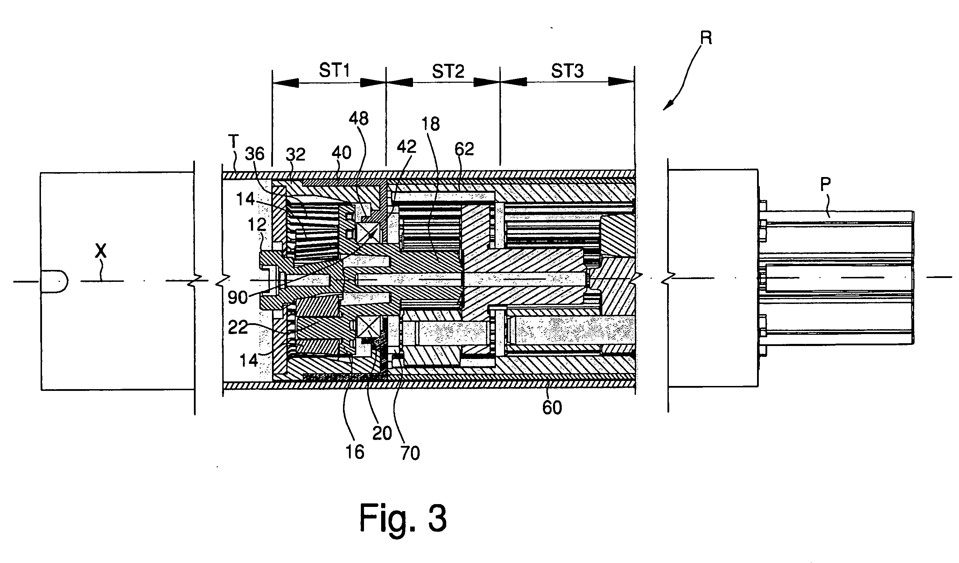

The reduction gear R, see fig. 3, is made up of three epicyclic stages ST1, ST2, ST3 adapted for reducing the number of revs, inputted by an electric motor (not shown), to move a rolling shutter or similar (not shown). The stages ST1, ST2, ST3 are housed and arranged in cascade in a containment tube T from which, at one end, an output shaft P projects that, rotating around an axis X and by means of a pulley that acts as an adapter member (not shown), it can actuate a rolling shutter.

The stages ST2, ST3, the closest to the output on the pinion P, are of known construction. They have a common crown 60 with internal toothing 62 in which the respective planet gears engage. The sun gear of stage ST3 is connected to the output shaft P.

Stage ST1, on the other hand, has a particular structure.

The pinion 12 receives the rotary motion from the electric motor (not shown) and transmits it to three planet gears 14, rotatably mounted on pins 22 of a planet gear carrier disc 16 having an axial central gear 18 adapted for transferring rotary motion to the planet gears of the second stage ST2. The pins 22 can be made one-piece with the planet gear carrier disc 16 or else separately and fixed to the latter. The planet gears 14 interact with the inner toothing 36 of a crown 30 that is separate and independent with respect to the crown 60.

The crown 30 comprises a bushing 32 and an outer coating 34. The bushing 32 has both bases or ends open, and on its inner surface there is the toothing 36. The coating 34 almost entirely covers the side of the bushing 32 and partially closes its base facing towards the stage ST2. Indeed, the coating 34 is substantially cup shaped, it is preferably made from elastic material (e.g. rubber or TPA) and it comprises a side portion 40, which embraces the outside of the bushing 32, and a closing portion or base 42 that extends from the side portion 40 perpendicular to the axis X. The base 42 has a central opening 46 in which the pinion 18 is inserted and through which the pinion 18 projects from the coating 34.

The diameter of the coating 34 is greater than the diameter of the bushing 32. The letter D indicates the semi-difference between the diameters in fig. 4. Such a margin ensures that just the coating 34, and not also the bushing 32, rests inside the containment tube T. This ensures that the vibrations generated inside the stage ST1 must necessarily pass through the coating 34 to reach the tube T. The rubber material avoids the transmission of such vibrations.

On the inner wall of the base 42 there is a circular lip 48 that defines at the centre a seat 90 for the bearing 20, which rotatably supports the planet gears carrier disc 16 and the pinion 18. Therefore, it can be seen that the coating 34 acts as a support element for the bearing 20.

The (optional) element indicated with 99 indicates a plug, or partition, or a dividing wall between the electric motor and the reduction gear.

The outer surface of the base 42 has some sections or arcs of toothed crown 70, adapted for engaging on the toothing 62 of stage ST2. Stage ST1 can be separated from stage ST2. With the assembly of the reduction gear R, stage ST1 is brought up to stage ST2. The engagement between the teeth 70 and the toothing 62 makes integral with each other the stages ST1 and ST2, so that they do not rotate with respect to one another in the tube T.

Stage ST1 thus constructed has many advantages. The vibrations generated during the rotation of the planet gears 14 are absorbed by the body of the coating 34: the bearing 20 is inserted in a seat 90 of elastic material that absorbs or attenuates those directed towards the second stage ST2, whereas the coating 34 absorbs or attenuates those directed towards the tube T.

It should be noted that often the rotation axis of the planet gears carrier disc 16 is not aligned with the axis X. The resulting precession causes vibrations and noise. The rubber and elastic seat of the bearing 20 not only exerts a force tending to bring back the planet gears carrier disc 16 into alignment, but also attenuates the vibrations generated by the rotation of the pinion 18. Moreover, said seat makes it possible to compensate and/or adapt the structure to possible alignment imprecisions between the various stages of the respective output pinions. All of this decreases the mechanical stress of the gears that make up the reduction gear.

It can also be considered to make the reduction gear as a succession of stages ST1 adjacent to one another. As can be noted, indeed, stage ST1 is a module working perfectly also insulated and easily connectable in cascade to other identical modules, where each reduction stage in the cascade can be sized to offer different reduction characteristics. Otherwise a single modular stage can be used.

The mechanical reduction gear can also be made with a single internally toothed outer crown that has various support elements for the output pinions.

## Claims

1. Epicyclic reduction gear (ST1) for an actuation system of movable barriers able to be inserted in a tubular casing (T) comprising
- an internally toothed crown (30) having a central axis (X),
- a planet gear carrier disc (16) rotatably arranged in the centre of the toothed crown and comprising
(i) a plurality of planet gears (14) arranged so as to engage with the internal toothing (36) of the toothed crown,
(ii) an output pinion (18) able to rotate coaxially to the crown to transfer the rotary motion at low revolutions,
**characterised in that** it comprises
a support element (42), made from cushioning and/or damping and/or elastic material, which extends inside the toothed crown to rotatably support the output pinion.

2. Reduction gear according to claim 1, wherein the support element forms an opening (46) in which the output pinion is inserted.

3. Reduction gear according to claim 2, wherein the support element extends inside the toothed crown transversally to said central axis and forms said opening at the centre of the toothed crown.

4. Reduction gear according to claim 2 or 3, comprising anti-friction means (20) arranged between said opening and the output pinion.

5. Reduction gear according to claim 4, comprising a rolling or sliding bearing (20), which is arranged in a bearing seat (90) obtained in the support element (42) and is mounted to keep the output pinion coaxial to the toothed crown.

6. Reduction gear according to Claim 5, wherein the bearing seat comprises a circular lip (48) obtained on an inner wall of the support element (42).

7. Reduction gear according to one of the previous claims, wherein the support element (42) comprises a portion (40) that overlaps at least part of the outer surface of the toothed crown, so that the support element has a maximum outer diameter that is greater than the maximum outer diameter of the toothed crown.

8. Reduction gear according to claim 7, wherein the support element (42) is cup- shaped with a cavity in which the toothed crown is inserted.

9. Reduction gear according to one of the previous claims, wherein on the surface of the support element facing the outside of the toothed crown there are sections or arcs of toothing facing radially outwards.

10. Gear motor for automating movable barriers or closing systems like for example gates, doors, garage doors or for moving rolling shutters like for example curtains, rolling gates, blinds or similar elements, comprising a reduction gear according to one of the previous claims.

## Patentansprüche

1. Planetenuntersetzungsgetriebe (ST1) für einen Antrieb von beweglichen Schranken, das in ein rohrförmiges Gehäuse (T) einführbar ist, bestehend aus:
- einem Zahnkranz (34) mit Innenverzahnung, der eine Mittelachse (X) aufweist,
- einem Planetenträger (16), der in der Mitte des Zahnkranzes drehbar gelagert ist, bestehend aus
(i) mehreren Planetenrädern (14), die so positioniert sind, dass sie in die Innenverzahnung (36) des Zahnkranzes eingreifen,
(ii) einem Abtriebsritzel (18), das gegenüber dem Kranz koaxial drehbar ist, um die Drehbewegung drehzahlreduziert zu übertragen,
**dadurch gekennzeichnet, dass**
es ein Stützelement (42) aus federndem und/oder dämpfendem und/oder elastischem Material besteht, das sich in dem Zahnkranz erstreckt, um das Abtriebsritzel drehbar abzustützen.

2. Untersetzungsgetriebe nach Anspruch 1, bei dem das Stützelement eine Öffnung (46) bildet, in der das Abtriebsritzel eingreift.

3. Untersetzungsgetriebe nach Anspruch 2, bei dem sich das Stützelement im Zahnkranz quer zur genannten Mittelachse erstreckt und die genannte Öffnung in der Mitte des Zahnkranzes bildet.

4. Untersetzungsgetriebe nach Anspruch 2 oder 3, das reibungshemmende Mittel (20) zwischen der genannten Öffnung und dem Abtriebsritzel aufweist.

5. Untersetzungsgetriebe nach Anspruch 4 mit einem Wälz- oder Gleitlager (20), das in einem Trägersitz (90) im Stützelement (42) angeordnet ist und das dazu dient, das Abtriebsritzel koaxial zum Kranz zu halten..

6. Untersetzungsgetriebe nach Anspruch 5, bei dem der Trägersitz (90) eine runde Lippe aufweist, die sich an einer Innenwand des Trägerelements (42) befindet.

7. Untersetzungsgetriebe nach einem der vorhergehenden Ansprüche, bei dem das Stützelement (42) einen Teil (40) aufweist, der zumindest zum Teil die Außenfläche des Zahnkranzes überlappt, damit der maximale Außendurchmesser des Stützelements größer als der maximale Außendurchmesser des Zahnkranzes ist.

8. Untersetzungsgetriebe nach Anspruch 7, bei dem das Stützelement (42) eine Becherform mit einer Vertiefung hat, in der sich der Zahnkranz befindet.

9. Untersetzungsgetriebe nach einem der vorhergehenden Ansprüche, bei dem auf der Oberfläche des zur Außenseite der Zahnkranz gerichteten Stützelements Verzahnungsabschnitte oder -Bögen angeordnet sind, deren Verzahnung radial nach Außen gerichtet ist.

10. Getriebemotor zur Automatisierung von beweglichen Schranken oder Schließanlagen (z.B. Tore, Türen, Garagentore) oder zur Bewegung von Rollvorrichtungen (z.B. Vorhänge, Roll-Läden, Fensterläden usw.) mit einem Untersetzungsgetriebe nach einem der vorhergehenden Ansprüche.

## Revendications

1. Réducteur planétaire (ST1) pour l'actionnement de barrières mobiles, insérable dans une enveloppe tubulaire (T), comprenant
- une couronne (34) dentée intérieurement dotée d'un axe central (X),
- un disque porte-satellites (16) placé de manière rotative au centre de la couronne dentée et comprenant
(i) plusieurs engrenages satellites (14) situés de manière à engrener avec la denture intérieure (36) de la couronne dentée,
(ii) un pignon de sortie (18) pivotant coaxialement à la couronne pour transférer le mouvement rotatoire à vitesse réduite,
**caractérisé par** le fait de comprendre
un élément de support (42), fabriqué dans un matériau amortissant et/ou atténuateur et/ou élastique, qui s'étend à l'intérieur de la couronne dentée pour supporter rotativement le pignon de sortie.

2. Réducteur selon la revendication 1, dans lequel l'élément de support forme une ouverture (46) dans laquelle vient s'insérer le pignon de sortie.

3. Réducteur selon la revendication 2, dans lequel l'élément de support s'étend à l'intérieur de la couronne dentée transversalement à l'axe central et forme l'ouverture au centre de la couronne dentée.

4. Réducteur selon la revendication 2 ou 3, comprenant des moyens antifriction (20) situés entre l'ouverture et le pignon de sortie.

5. Réducteur selon la revendication 4, comprenant un palier (20) à roulement à billes ou à glissement, lequel est disposé dans un logement porteur (90) réalisé dans l'élément de support (42) et monté pour maintenir le pignon de sortie en position coaxiale par rapport à la couronne dentée.

6. Réducteur selon la revendication 5, dans lequel le logement porteur (90) comprend une lèvre circulaire (48) réalisée sur une paroi interne de l'élément de support (42).

7. Réducteur selon l'une quelconque des revendications précédentes, dans lequel l'élément de support (42) comprend une portion (40) se superposant au moins à une partie de la surface extérieure de la couronne dentée, de manière à ce que l'élément de support ait un diamètre extérieur maximal supérieur au diamètre extérieur maximal de la couronne dentée.

8. Réducteur selon la revendication 7, dans lequel l'élément de support (42) a une forme en tulipe comportant une cavité dans laquelle vient s'insérer la couronne dentée.

9. Réducteur selon l'une quelconque des revendications précédentes, dans lequel, sur la surface de l'élément de support tournée vers l'extérieur de la couronne dentée, sont présents des tronçons ou des arcs de denture dirigés radialement vers l'extérieur.

10. Motoréducteur pour l'automatisation de barrières mobiles ou de systèmes de fermeture tels que, par exemple, des grilles de portail, des portes, des portails de garage, ou pour la mise en oeuvre de volets roulants tels que, par exemple, des rideaux, des stores, des persiennes ou tout élément similaire, comprenant un réducteur tel que décrit dans l'une quelconque des revendications précédentes.
